# EUROPEAN PATENT APPLICATION

(11) **EP 1 060 855 A2**
(43) Date of publication of application: **20.12.2000**
(21) Application number: 00111149.1
(22) Date of filing: 24.05.2000
(51) Int. Cl.: B28D 1/04, B28D 1/12

(54) **Apparatus for cutting stone materials, such as granite, marble or the like**

(30) Priority: 10.06.1999 IT SV990019
(71) Applicant: Benetti Impianti S.r.l., 54033 Carrara (MS) (IT)
(72) Inventor: Benetti, Enrico, 54033 Carrara (IT)
(74) Representative: Karaghiosoff, Giorgio A.

(57) **Abstract**

An apparatus for cutting stone materials, such as granite, marble or the like, comprises a supporting frame (1), a rotary cutting disk with cutting teeth (202), means (4) for rotatably supporting the cutting disk, means (5) for rotatably driving the cutting disk by its periphery and means (12,13) for moving the cutting disk in at least one predetermined direction. According to the invention, the rotary drive means (5), e.g. a gear, mate with the cutting disk in an eccentric position thereof, and the means (4) for rotatably supporting the cutting disk are also in an eccentric position thereof, both means (4,5) being preferably arranged on the same side of the cutting disk. These arrangements are such that a cutting depth greater than the radius of the cutting disk is obtained. In accordance with a preferred embodiment, the cutting disk is made of two parts, an inner supporting and guiding part (3), integral with the frame (1) of the apparatus, and an outer peripheral rotary cutting part (2), wherewith the rotary drive means (5) directly mate.

## Description

The invention relates to an apparatus for cutting stone materials, such as granite, marble or the like, comprising a supporting frame, a cutting disk, rotatable about its central axis, means for rotatably supporting the cutting disk and means for moving the cutting disk in at least one predetermined direction.

A variety of disk type apparati for cutting stone materials are known to the skilled in the art. These prior art apparati find use, for example, in cutting on benches at quarries, in squaring blocks of the above stone materials, after quarrying or for further processing. Said known apparati typically comprise a cutting disk, rotating about its central axis and having peripheral teeth, each typically bearing a cutting tool. The cutting unit is supported on slidable guide means, allowing the unit to translate and perform cutting along a plane and in a desired direction. While these known apparati can effectively achieve their purpose, they have a few drawbacks: the cutting disk is supported at its center by a coaxial shaft which generally has the additional function of rotatably driving the disk. This shaft is dynamically connected to a motor or to a gearmotor unit. Due to the axial dimensions both of the supporting shaft and possibly also of the means for connection to the disk and to the drive gears, the cutting disk can penetrate the stone material through a cutting depth/height which is in any case smaller than its radius, and generally only 40% of its diameter. As a result, in order to obtain a suitable cutting depth, the apparati to be used should have disks whose diameters are much longer than the actual cutting depth. Moreover, as the disk diameter, as well as the rotating mass, increase, all the other elements constituting the apparatus are to be resized accordingly, e.g. slide guides and the support structure are to be stronger, and the apparatus is to be provided with more powerful driving means. All these factors cause an increase of the dimensions and weight of the apparatus and a reduced transportability thereof, with a consequent cost increase for the user. Further, as the radius of the cutting disk increases, the centrifugal stress also increases, requiring an suitably resistant construction of the cutting disk.

Therefore, the present invention has the object to obviate the above drawbacks and to provide, by simple and inexpensive arrangements, a disk type apparatus for cutting stone materials such as the one described above, which provides a cutting depth/height greater than the radius of the disk, i.e. a cutting depth greater than a prior art apparatus with a disk having the same diameter; which does not require proportional resizing of all the other elements constituting the apparatus, to make apparati with cutting disks having increasing diameters, and possibly such that this resizing operation is not needed; which has smaller dimensions and a reduced weight as compared with a prior art apparatus providing the same cutting depth; which is simple and inexpensive to manufacture.

The invention achieves the above objects, by providing an apparatus such as the one described above, wherein the means for rotatably driving the cutting disk may mate with the disk in an eccentric position thereof.

The means for rotatably supporting the cutting disk may also be provided in an eccentric position thereof. These two basic characteristics of the invention provide a cutting depth which is greater than the radius of the cutting disk, by eliminating any axially and/or radially extending element in the area of the axis of rotation of the disk.

The means for rotatably driving the cutting disk can mate with the disk in a peripheral position thereof and directly on the rotating cutting disk.

The cutting disk may be composed of at least two parts, an inner stationary guiding and supporting part, being integral with the frame of the apparatus, and an outer peripheral and movable cutting part.

The cutting disk may include a peripheral annular rotating blade, having a plurality of peripheral teeth, at least a few of which, or each of which bear at least one cutting tool. These cutting tools may be of any known type, depending on the stone material to be cut, and combinations of different types of cutting tools may be also provided on one disk, in predetermined arrangements, on the peripheral tool-supporting teeth.

Said annular blade may be mounted in such a manner as to be able to rotate about its central axis, thanks to rotary sliding means, sliding on a coaxial support disk, the so-called fifth wheel.

There may be provided at least one lateral or peripheral pinion, rotating about an axis parallel to the axis of rotation of the annular blade and with teeth meshing with the teeth of said rotating annular blade. Hence, the teeth of the rotating annular blade have the simultaneous functions to support the cutting tools and to mate with the driving pinion. The above described rotary drive system is highly reliable and easy to manufacture, and requires little maintenance.

Advantageously, the stationary central element for rotatably supporting the peripheral annular blade may also be annular, thereby achieving the result of a weight reduction of the whole apparatus.

The annular blade may be thicker than the stationary rotatably supporting central element, but advantages are obtained from providing equal thicknesses for both, so that the central supporting element may perform its function as a guide through the stone material as accurately as possible.

The element for rotatably supporting the annular cutting blade, provided as a disk or as an annular element, may be secured to the supporting frame of the apparatus in an eccentric position, preferably on the side whereon the annular blade mates with the driving pinion, so that interference with cutting operations are minimized.

There may be provided means for rotatably sliding and guiding the annular blade, interposed between the radially inward edge thereof and the peripheral radially outward edge of the central supporting disk or ring.

Advantageously, these means for rotatably sliding the annular blade may consist of a plurality of roller or ball bearings or the like, each mounted on an axial pivot borne by the supporting and guiding element and all arranged on the same circumference, particularly all at the same radial distance from the center of the supporting element.

These bearings all adhere peripherally against an annular inner guiding rib of the rotating blade, which rib is engaged in a peripheral guide groove, along the outer circumference of the annular blade supporting element.

This guide groove may consist of two peripheral annular extensions of the faces of the supporting and guiding element, axially spaced to form a peripheral channel, and extending flush with the corresponding faces of the supporting element.

One of the peripheral annular extensions may be part of the face of the stationary supporting and guiding element which bears the pivots for supporting the bearings, and the other may be part of an annular closing element, which may be removably secured to the supporting element, so that, when mounted, the two faces of the supporting element have the same outside diameter and the supporting element has a constant thickness. By arranging that said annular closing element is secured in a removable manner, the space for accommodating the bearings may be accessed, e.g. for maintenance purposes and/or for a possible replacement of the annular cutting blade, e.g. when materials with different characteristics are to be cut. Further, it has to be noted that, as compared with prior art apparati with cutting disks consisting of a single element, in the apparatus according to the present invention, only the peripheral part of the cutting disk i.e. the annular blade has to be replaced.

Alternatively, a first annular element may be integrally attached to the annular blade, on the radially inward circumference, and mounted so as to be able to rotate, thanks to rolling bodies, on a second radially inward annular element, integrally attached to the peripheral edge of the supporting and guiding element. The two annular elements have each an annular groove, the one an inner peripheral groove, the other an outer peripheral groove, which, combined together, form a channel for accommodating the rolling bodies, which are preferably balls or rollers.

These grooves face each other and have equal, particularly triangular sections. Also, the rolling bodies cooperate with the grooves to maintain the position of the annular blade with respect to the stationary supporting element during rotation.

In a further alternative, the annular blade may be rotatably supported on a fluid bearing, particularly water or the like, supplied under pressure, which is situated between the inner radial circumference of the annular blade and the outer radial circumference of the stationary supporting and guiding element. To this end, supply ducts may be provided within the thickness of the central supporting element as well as peripheral nozzles. It has to be noted that the fluid under pressure may be supplied in such a manner that it can simultaneously cool the cutting area and remove cutting waste.

The teeth of the annular blade and of the driving pinion may be provided as involute flat-headed gear teeth. The teeth of the annular blade bear on their apex each at least one cutting tool removably secured thereto, and radially projecting out of the flat head. The driving pinion has a radial recess or a channel between each pair of adjacent teeth, for accommodating the cutting teeth disposed on the apexes of the teeth of the cutting blade. This arrangement allows the annular blade to rotatably mate with the driving pinion with no interference between the cutting tools and the pinion.

The pinion for rotatably driving the annular blade may be connected to a drive motor, preferably situated on the support structure of the cutting apparatus, and which may also have the function to displace the apparatus along the cutting direction.

The apparatus which includes a cutting unit, comprising a motor unit, a driving pinion, an annular cutting blade and a central supporting and guiding element, may be mounted in a stationary manner on a support structure which may be mounted in such a manner as to be able to slide in one direction, thanks to sliding and guiding means, to allow cutting in a predetermined direction and along a predetermined plane, particularly along a plane wherein the axis of rotation of the blade is perpendicular to the direction of sliding of the cutting unit. These arrangements may be implemented, for instance, to provide apparati for vertical or horizontal cutting on benches.

Alternatively, the cutting unit may be mounted on a support structure which slides in one direction, thanks to supporting and guiding means, so that it can be directed and locked in more than one angular position, in which the axis of rotation of the blade is perpendicular to the sliding direction, especially in two orthogonal positions. These arrangements may allow to provide an apparatus for performing, alternately, vertical, horizontal or oblique cutting.

The sliding and guiding means may consist of a slide, preferably a pair of slides, arranged on the supporting frame of the cutting unit which are slidably engaged with a corresponding pair of guides, fixed or fixable on stationary or movable supporting means.

The apparatus which forms the subject of this invention may be advantageously arranged to be mounted at the end of an articulated arm, preferably provided in combination with a self-propelled machine, like an excavator or the like.

The cutting unit, comprising a motor unit, a driving pinion, an annular cutting blade and a central supporting and guiding element may be arranged to be mounted on a supporting frame, which is mounted on combinations of slides and guides in such a manner as to be able to slide and move in two or more different, predetermined or adjustable, particularly perpendicular directions. The cutting unit may oscillate about at least one axis, parallel to at least one of the directions, preferably about two or more axes, each being parallel to one of said sliding directions, and rotate about an axis perpendicular to the directions, the two sliding directions being parallel to the plane defined by the cutting blade.

Two cutting units may be provided on a mount, each comprising a motor unit, a driving pinion, a central guiding element and an annular rotating blade. The whole mount can slide on first guides in a predetermined first direction and so as to displace simultaneously both cutting units, and the two cutting units are or may be directed to make combined, particularly orthogonal cuts. At least one of the two cutting units may slide in a second direction on a second guide of the mount, which is or may be directed transversely to the first one, to make cuts transverse to the first sliding direction and this unit may be directed in several different angular positions in which the axis of rotation of the blade is perpendicular to the second sliding direction and may rotate about an axis perpendicular to said direction.

Two cutting units may be arranged to be integrally secured on a mount, each comprising a motor unit, a driving pinion, a central guiding element and an annular rotating blade, the whole mount being able to slide on first guides in a predetermined first direction and so as to displace simultaneously both cutting units. The two cutting units are disposed so as to be able to make combined cuts, along two transverse, particularly orthogonal planes, and a third cutting unit is provided, mounted on a supporting frame, which can slide on second guides of the mount, directed in a second direction, perpendicular to the first direction of the first guides, to make cuts along planes orthogonal to the planes of the above combined cuts.

The advantages of the present invention are self-evident from the above description: with the apparatus of the present invention, a much greater cutting depth of the disk may be obtained, as compared with prior art apparati, particularly about 70% of the diameter of the disk. Therefore, as compared with a prior art apparatus having the same cutting depth, a disk with a smaller diameter may be provided and, as a result, the whole apparatus is lighter, more compact and cost-effective. Further, it has to be observed that, as the diameter of the cutting disk, consisting of the above described supporting and guiding element and of the annular blade, increases, the dimensions of the supporting means and of the rotary drive means do not increase, hence a longer actual cutting diameter is obtained. The apparatus according to the invention has a simple and inexpensive construction and can be used, also due to weight reduction, in multiple applications, which will be detailed in the description of the drawings.

Further characteristics and possible improvements of the invention will form the subject of the dependent claims.

The characteristics of the invention and the advantages derived therefrom will appear more clearly from the following detailed description of the accompanying drawings, in which:

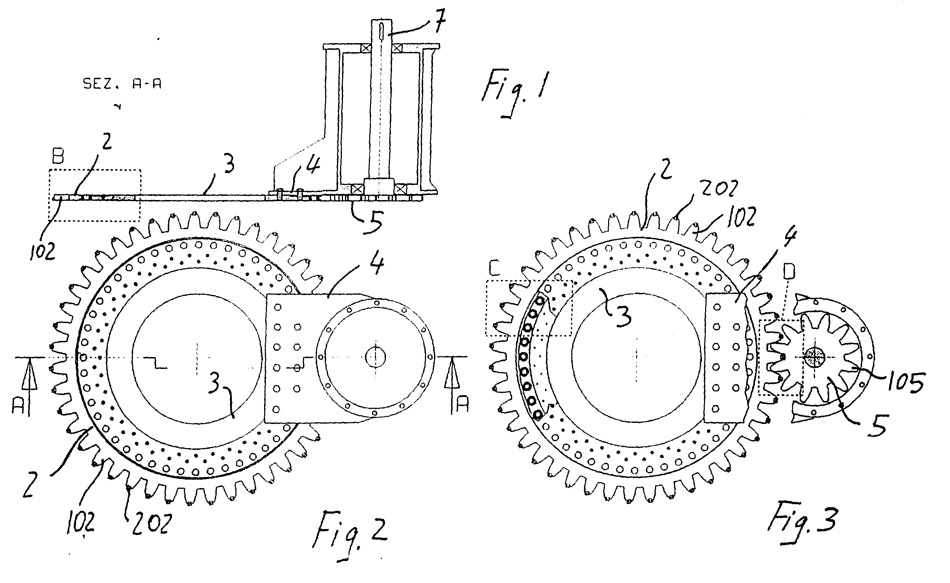

Fig. 1 is a sectional view of an apparatus according to the invention, as taken across line AA of fig. 2.
Fig. 2 is a front view of a detail of an apparatus according to the invention.
Fig. 3 is the same view as fig. 2, but partially broken.
Fig. 4 shows an enlarged detail of fig. 1.
Fig. 5 shows an enlarged detail of fig. 3.
Fig. 6 shows an enlarged detail of fig. 3.
Figs. 7A and 7B show a variant embodiment of the means for sliding and guiding the annular blade.
Fig. 8 shows an apparatus according to the invention for horizontal cutting on benches.
Figs. 9 and 10 are two different views of an apparatus according to the invention for vertical cutting on benches.
Figs. 11 and 12 are two views of a combined machine comprising three apparati according to the invention for cutting on huge benches.
Figs. 13, 14 and 15 are views of the apparatus according to the invention, provided in combination with an articulated arm, mounted on a self-propelled means, in three different cutting applications.

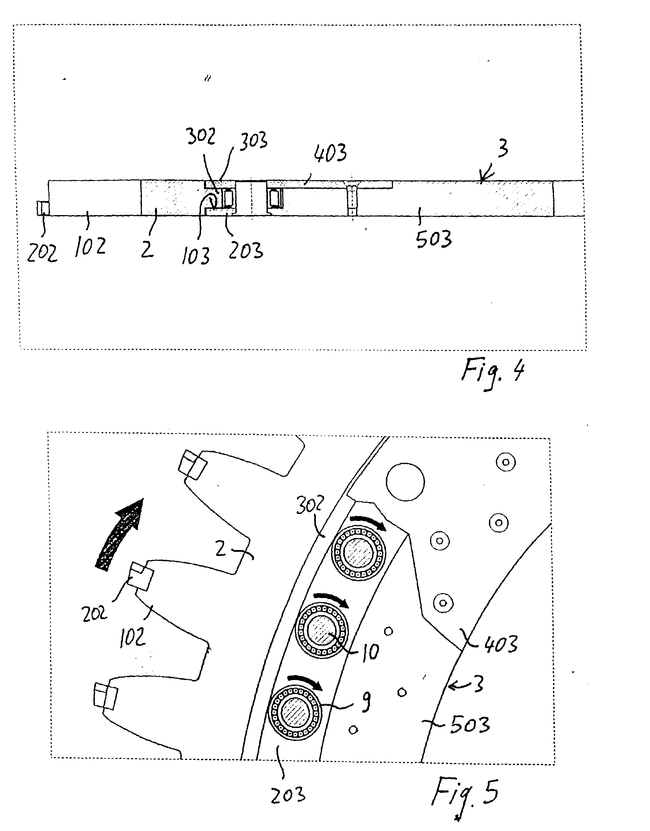

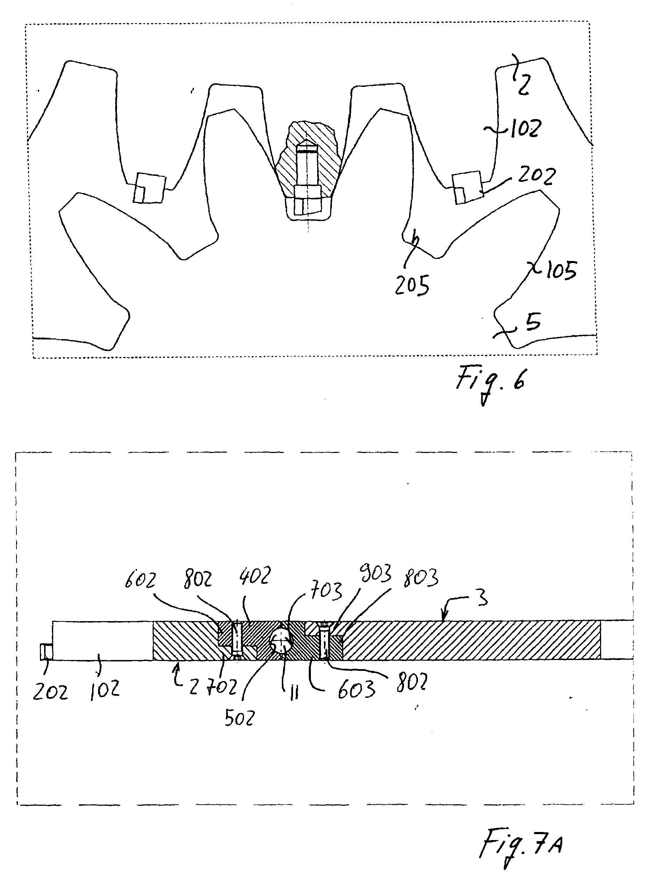

Referring to the figures, an apparatus for cutting stone materials according to the invention comprises a supporting frame 1, which has the function to support the various components of the apparatus. These components include an annular blade 2, having a plurality of peripheral, preferably involute teeth 102, each of which bears on its apex a cutting tool 202, removably and replaceably mounted on the tooth 102. This annular cutting blade 2 is mounted in such a manner as to be able to rotate about its central axis, on a supporting and guiding element 3. This element 3 may be provided in the form of a disk or, as shown in the figures, in the form of an annular element. This second arrangement advantageously allows to reduce the weight of the apparatus. Said supporting element 3 also has the function to guide the axial rotation of the blade 2 and to guide its penetration into the stone material. As particularly shown in fig. 4, it preferably is as thick as the annular blade 2.

This element 3 for supporting and guiding the annular blade 2 is mounted in a stationary manner on the supporting frame 1, by means of a supporting element consisting of a fastening bracket 4. Said bracket 4 is arranged to be fastened on the element 3 in an eccentric position thereof.

The annular cutting blade 2 is rotatably driven by a driving pinion 5, situated on one side of the annular blade 2 and on the same side as the bracket 4. These arrangements allow the annular blade 2 to penetrate the stone material through a cutting depth which is much greater than prior art apparati having a centrally supported cutting disk, anyway well below the length of the radius of the blade 2.

The pinion 5 is connected to a drive motor 6 of any type fit for the purpose, preferably of the electric type, by means of a drive shaft 7, secured on the center of rotation of the pinion 5 and parallel to the axis of rotation of the annular blade 2. In accordance with an advantageous embodiment of the invention, means 8 for angularly deviating the rotary motion of the motor shaft 6, in order to set it at an angular position so as to reduce the overall size of the apparatus.

The driving pinion 5 has peripheral teeth 105, also preferably of the involute type, which mesh with the teeth 102 or the annular cutting blade 2 to transmit the rotary motion.

As particularly shown in fig. 6, the pinion 5 has a channel 205 or recess between each pair of adjacent teeth 105, for accommodating the cutting tools 202 disposed on the teeth 102 of the annular blade 2, to prevent these cutting tools 202 from interfering with the pinion 5. These tools 202 project beyond the flat head 102 of the annular blade 2 and, without these channels 205 would interfere with the pinion 5 during rotation.

As particularly shown in figs. 4 and 5, the annular blade 2 is supported on the central guiding element 3 by rotary sliding means, consisting of a plurality of bearings 9, here of the roller type, which may be however provided as balls or the like. The annular cutting blade 2 has a radially inward annular rib 302 which rotatably adheres against the peripheral surface of these bearings 9. Each of the bearings 9 is mounted on an axial pivot 10, which is integral with the supporting and guiding element 3. These bearings 9 are all arranged on the same circumference, i.e. all at the same distance from the center of the supporting and guiding element 3.

The inner annular rib 302 of the blade 2 is engaged in a peripheral annular guide 103 provided in the supporting and guiding element 3. This guide 103 consists of two peripheral annular extensions 203, 303 of the faces of the supporting and guiding element 3, which extend flush with their respective faces. It has to be noted that, while the annular extension 203 is part of one of the faces of the supporting element 3, particularly of the face which bears the pivots 10 of the bearings 9, the annular extension 303 is part of an annular closing element 403 which is removably secured to the supporting element 3 by means of pins 503.

Figs. 7A and 7B show a possible variant of the sliding guide system designed for the annular cutting blade 2 on the central supporting element 3. This variant provides that, on the radially inward circumference of the annular blade 2, an annular element 402 is located, integrally coupled to the blade 2, and that, on the radially outward circumference of the central supporting element 3, a further annular element 603 is located, in turn integrally coupled to the central element 3. These elements 402, 603 have each one annular groove 502, 703, preferably with a semicylindrical section. The annular elements 402, 603 have outer step-like radial flanges 602, 803, which mate with the inner and outer radial step-like flanges 702, 903 respectively of the annular blade 2 and of the central supporting element 3. The elements are fastened by means of embedded axial screws or bolts 802. Said grooves 502, 703 face each other to form a channel for accommodating rolling bodies, here shown as balls 11. Said two annular elements 402, 603 may advantageously be made of a material which is both different from the material of the blade 2 and from the one of the central element 3, a material characterized, for instance, by a higher hardness, due to its being subject to the rolling friction of the balls 11.

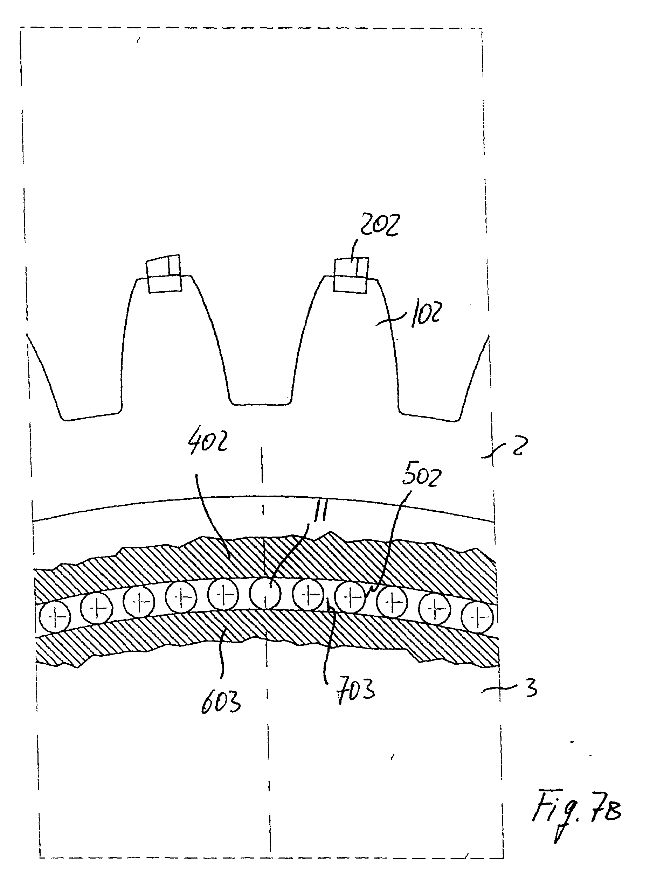

Fig. 8 shows an apparatus according to the invention for horizontal cutting on benches. The apparatus slides in one direction thanks to the fact that the supporting frame 1 comprises two slides 12 which are slidably mounted on two guides 13 which can be directly fastened onto a surface substantially coplanar to the cutting plane. In the figure this surface consists of a face previously formed in the bench itself, but the apparatus may be slidably mounted on any structure fit for the purpose.

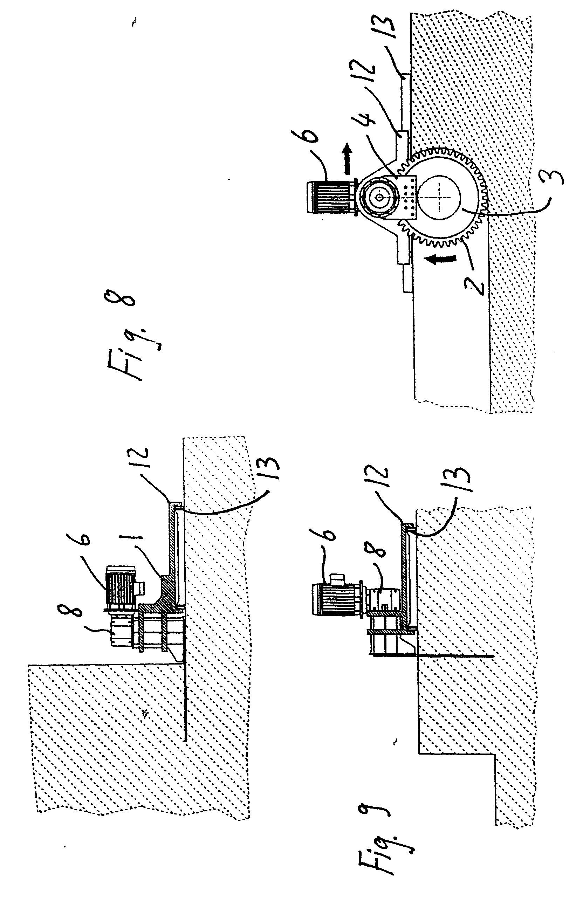

Figs. 9 and 10 show an apparatus according to the invention which is substantially similar to the one of fig. 8, but in which the cutting unit, composed of the motor 6, the pinion 5, the annular blade 2 and the central supporting and guiding element 3, is disposed in such a manner as to perform vertical cutting, i.e. cutting along a plane orthogonal to the sliding plane of the slides.

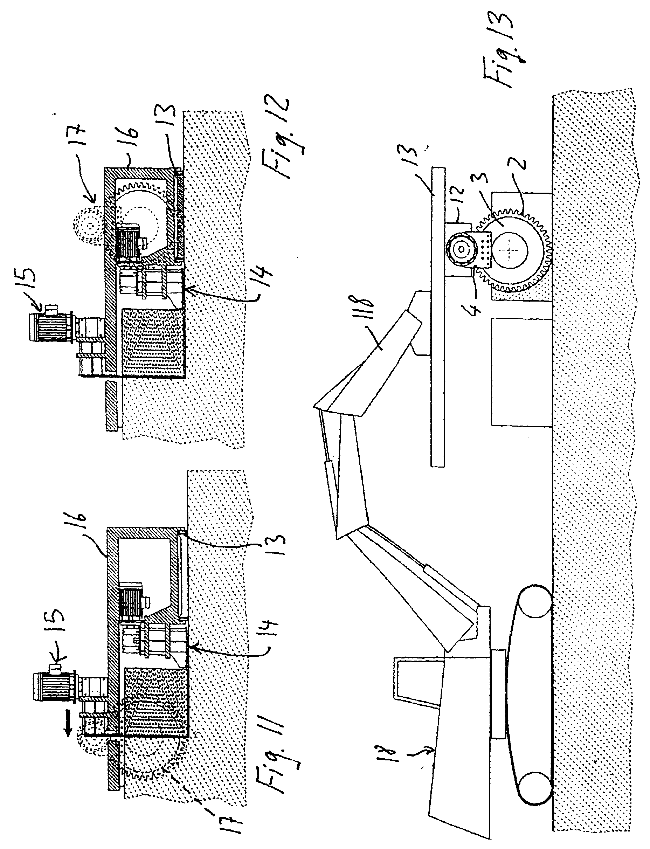

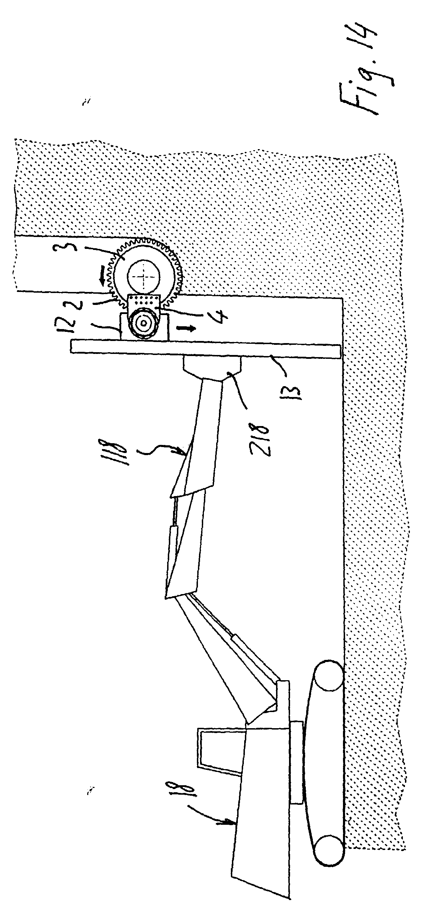

Figs. 11 and 12 show a combined machine having three apparati according to the invention. The first two apparati 14, 15 are arranged to be integrally mounted on a mount 16, itself mounted in such a manner as to slide in a first direction on two sliding guides 13 by means of a pair of slides 12 provided on the mount 16. The annular cutting blades 2 are disposed in such a manner as to allow to simultaneously make two combined cuts along orthogonal planes. A third apparatus 17 is further provided, mounted on guides provided on the mount 16 in such a manner as to be able to slide in a further direction, perpendicular to the first one, to make cuts along a plane transverse and orthogonal to the two previous planes, e.g. end cuts on stone blocks.

Figs. 13, 14 and 15 show an apparatus according to the invention, arranged to be mounted at the end of an articulated arm 118 of a self-propelled machine 18, like an excavator. The well-known characteristics of articulated arms allow to orient the apparatus in various directions, and make this arrangement particularly versatile with respect to even highly variable cutting needs, depending on situations.

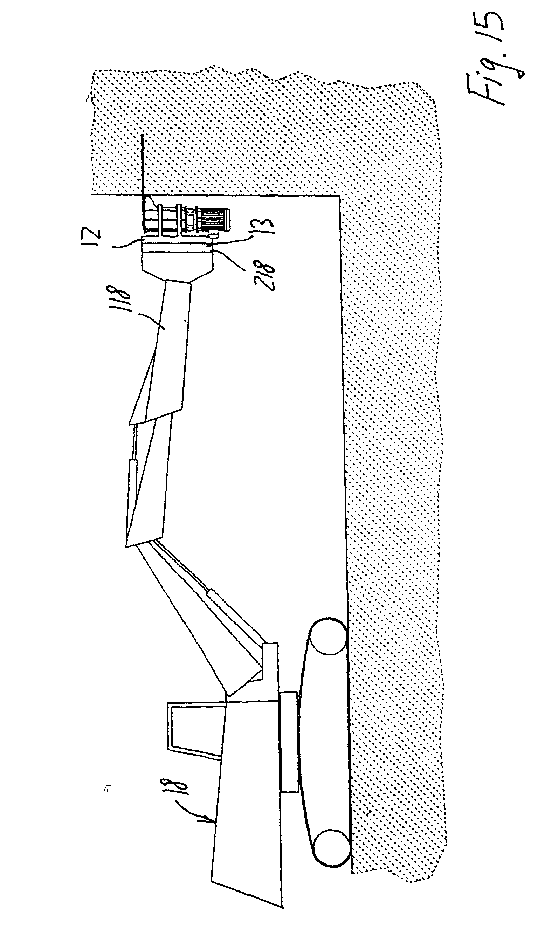

In fig. 13, for instance, the apparatus is shown in its use for squaring stone blocks after quarrying, whereas in figs. 14 and 15 the same apparatus, mounted on the same excavator is shown in its use for vertical or horizontal cutting, for instance on a bench or a tunnel, even at considerable heights from the ground.

With particular reference to the application of the apparatus to the arm as used in excavators or the like (fig. 15), thanks to the articulated arm and to the fact that the apparatus is mounted at the end of the arm so as to be able to slide on a straight guide 13 by means of a head 118 rotating about an axis perpendicular to the sliding direction, cutting may be performed in any direction, while the weight and size of the cutting apparatus are drastically reduced.

Obviously, the invention is not limited to the embodiments described and illustrated herein, but all the characteristics may be widely varied. For example, the apparatus according to the invention may be arranged to be mounted on supporting structures differing from those described herein, e.g. on a bridge structure, or to have such characteristics as to be suitable for cutting non-stone materials. The apparatus may be also arranged to be fastened on a supporting structure in a completely stationary manner, while cutting is effected due to the sliding of the stone pieces, blocks or slabs.

The support of the annular blade 2 may be also different from the one described herein, and consist of a fluid bearing generated by fluid supply ducts disposed within the thickness of the central supporting element 3, and opening into the guide 103. The fluid may be, for instance, water, and said system may be derived in a similar manner from stone cutting machines of the oscillating arm or diamond belt type. A further construction variant may provide, instead of the rigid annular blade 2, a flexible cutting blade in the form of a diamond belt, which engages the pinion, with teeth arranged on the radially inward side thereof, extending around the central supporting element and around the pinion.

All this without departure from the guiding principle disclosed above and claimed below.

## Claims

1. An apparatus for cutting stone materials, such as granite, marble or the like, comprising a supporting frame (1), a cutting disk, rotatable about its central axis, means (4) for rotatably supporting the cutting disk, means (5) for rotatably driving the cutting disk and means (12, 13) for moving the cutting disk in at least one predetermined direction, characterized in that the rotary drive means (5) mate with the cutting disk in an eccentric position of the cutting disk.

2. An apparatus as claimed in claim 1, characterized in that the means (4) for rotatably supporting the cutting disk are provided in an eccentric position of the cutting disk, such as to provide a cutting depth which is higher than the radius of the cutting disk.

3. An apparatus as claimed in claims 1 and 2, characterized in that the means (5) for rotatably driving the cutting disk mate with the cutting disk, in a peripheral position thereof and directly on the rotary cutting disk.

4. An apparatus as claimed in one or more of the preceding claims, characterized in that the cutting disk is composed of at least two parts, an inner stationary guiding and supporting part (3), being integral with the frame (1) of the apparatus, and an outer peripheral and movable cutting part (2).

5. An apparatus as claimed in one or more of the preceding claims, characterized in that the cutting disk comprises a peripheral annular rotating blade (2), which has a plurality of peripheral teeth (102), at least part of which or each of which bear at least one cutting tool (202), which annular blade (2) is mounted in such a manner as to be able to rotate about its central axis, thanks to rotary sliding means (302, 9, 402, 603, 11), onto a coaxial supporting disk (3), there being provided at least one lateral or peripheral driving pinion (5), rotating about an axis parallel to the axis of rotation of the annular blade (2), and whose teeth (105) mesh with the teeth (102) of said rotating annular blade (2), which teeth (102) of the annular blade (2) have the simultaneous functions to support the cutting tools (202) and to mate with the pinion (5).

6. An apparatus as claimed in one or more of the preceding claims, characterized in that the stationary central element (3) for rotatably supporting the peripheral annular blade (2) is also annular.

7. An apparatus as claimed in one or more of the preceding claims, characterized in that the annular blade (2) is as thick as or thicker than the stationary rotatably supporting element (3).

8. An apparatus as claimed in one or more of the preceding claims, characterized in that the element (3) for rotatably supporting the annular cutting blade (2) in the form of a disk or of an annular element, is eccentrically secured to the supporting frame (1), preferably on the same side whereon the annular blade (2) mates with the driving pinion (5).

9. An apparatus as claimed in one or more of the preceding claims, characterized in that there are provided means for sliding (9, 11) and guiding (302, 103, 502, 703) the annular blade (2), interposed between the radially inward edge thereof and the peripheral radially outward edge of the central supporting disk or ring (3).

10. An apparatus as claimed in one or more of the preceding claims, characterized in that the means for rotatably sliding the annular blade (2) consist of a plurality of roller or ball bearings (9) or the like, each mounted on an axial pivot (10) borne by the supporting and guiding element (3) and all arranged on the same circumference, particularly all at the same radial distance from the center of the supporting element (3), which bearings (9) all adhere peripherally against an annular inner guiding rib (302) of the rotating blade (2), which rib (302) is engaged in a peripheral guide groove (103), along the outer circumference of the element (3) for supporting the annular blade (2).

11. An apparatus as claimed in one or more of the preceding claims, characterized in that this guide groove (103) consists of two peripheral annular extensions (203, 303) of the faces of the supporting and guiding element (3), axially spaced to form a peripheral channel (103), and extending flush with the corresponding faces of the supporting element (3).

12. An apparatus as claimed in one or more of the preceding claims, characterized in that one (203) of the peripheral annular extensions is part of the face of the stationary supporting and guiding element (3) which bears the pivots (10) for supporting the bearings (9), and the other (303) is part of an annular closing element (403), which may be removably secured to the supporting element (3), so that, when mounted, the two faces of the supporting element (3) have the same outside diameter and the supporting element (3) has a constant thickness.

13. An apparatus as claimed in one or more of claims 1 to 9, characterized in that a first annular element (402) is integrally attached to the annular blade (2), on the radially inward circumference, and mounted so as to be able to rotate, thanks to rolling bodies (11), on a second radially inward annular element (603), integrally attached to the peripheral edge of the supporting and guiding element (3), both annular elements (402, 603) being each provided with an annular groove (502, 703), the one (402) an inner peripheral groove (502), the other (603) an outer peripheral groove (703), which, combined together, form a channel for accommodating the rolling bodies, which are preferably balls (11) or rollers.

14. An apparatus as claimed in claim 13, characterized in that said grooves (502, 703) face each other and have equal, particular semicylindrical sections.

15. An apparatus as claimed in claims 1 to 9, characterized in that the annular blade (2) is rotatably supported on a fluid bearing, particularly water or the like, said fluid supplied under pressure being provided between the radially inward of the annular blade (2) and the radially outward circumference of the stationary supporting and guiding element (3) through ducts disposed within the thickness of the central supporting element (3) and peripheral nozzles.

16. An apparatus as claimed in one or more of the preceding claims, characterized in that the teeth (102, 105) of the annular blade (2) and of the driving pinion (5) are provided as involute flat-headed gear teeth, and that the teeth (102) of the annular blade (2) bear on their apex each at least one cutting tool (202) removably secured thereto, and radially projecting out of the flat head, whereas the driving pinion (5) has a radial housing recess (205) or channel between each pair of adjacent teeth (105), which does not interfere with the cutting tools (202) provided on the apices of the teeth (102) of the annular blade (2).

17. An apparatus as claimed in one or more of the preceding claims, characterized in that the pinion (5) for rotatably driving the annular blade (2) is connected to a drive motor (6), preferably located on the supporting structure (1) of the cutting apparatus.

18. An apparatus as claimed in one or more of the preceding claims, characterized in that it includes a cutting unit, comprising a motor unit (6), a driving pinion (5), an annular cutting blade (2) and a central supporting and guiding element (3), which is mounted in a stationary manner on a support structure (1) which may be mounted in such a manner as to be able to slide in one direction, thanks to sliding and guiding means (12, 13), to allow cutting in a predetermined direction and along a predetermined plane, particularly along a plane wherein the axis of rotation of the blade (2) is perpendicular to the direction of sliding of the cutting unit.

19. An apparatus as claimed in one or more of claims 1 to 17, characterized in that the cutting unit is mounted on a support structure (1) which slides in one direction, thanks to supporting and guiding means (12, 13), so that it can be directed and locked in more than one angular position, in which the axis of rotation of the blade (2) is perpendicular to the sliding direction, especially in two orthogonal positions.

20. An apparatus as claimed in one or more of the preceding claims, characterized in that the sliding and guiding means consist of a slide, preferably a pair of slides (12), arranged on the supporting frame (1) of the cutting unit, which are slidably engaged with a corresponding pair of guides (13), fixed or fixable on stationary or movable supporting means.

21. An apparatus as claimed in one or more of the preceding claims, characterized in that it is arranged to be mounted at the end of an articulated arm (118), preferably provided in combination with a self-propelled machine, like an excavator (18) or the like.

22. An apparatus as claimed in one or more of the preceding claims, characterized in that the cutting unit, comprising a motor unit (6), a driving pinion (5), an annular cutting blade (2) and a central supporting and guiding element (3), may be arranged to be mounted on a support structure (1) which is mounted on combinations of slides (12) and guides (13) in such a manner as to be able to slide and move in two or more different, predetermined or adjustable, particularly perpendicular directions, whereas The cutting unit may oscillate about at least one axis, parallel to at least one of the directions, preferably about two or more axes, each being parallel to one of said sliding directions, and rotate about an axis perpendicular to the directions, the two sliding directions being parallel to the plane defined by the cutting blade (2).

23. An apparatus as claimed in one or more of the preceding claims, characterized in that two cutting units may be provided on a mount, each comprising a motor unit (6), a driving pinion (5), a central guiding element (3) and an annular rotating blade (2), the whole mount being able to slide on first guides in a predetermined first direction and so as to displace simultaneously both cutting units, and both cutting units being directed or able to be directed in such a manner as to make combined, particularly orthogonal, cuts, and at least one of the two cutting units being able to slide in a second direction on a second guide of the mount, which is or may be directed transversely to the first one, to make cuts transverse to the first sliding direction and said unit being able to be directed in several different angular positions in which the axis of rotation of the blade (2) is perpendicular to the second sliding direction and may rotate about an axis perpendicular to said direction.

24. An apparatus as claimed in one or more of the preceding claims, characterized in that two cutting units (14, 15) are provided on a mount (16), each comprising a motor unit (6), a driving pinion (5), a central guiding element (3) and an annular rotating blade (2), the whole mount being able to slide on first guides (12, 13) in a predetermined first direction to displace simultaneously both cutting units (14, 15), and both cutting units being arranged to make combined cuts, along two transverse, particularly orthogonal planes, and a third cutting unit (17) being provided, mounted on a supporting frame (1), which can slide on second guides of the mount (16), directed in a second direction, perpendicular to the first direction of the first guides (12, 13), to make cuts along planes orthogonal to the planes of the above combined cuts.

25. An apparatus as claimed in one or more of the preceding claims, characterized in that it is an apparatus for cutting stone blocks on benches.

26. An apparatus as claimed in one or more of the preceding claims, characterized in that it is mounted on an articulated arm (118) as those used in excavators (18) or the like, a rotating head (218) being interposed therebetween.

27. An apparatus as claimed in claim 26, characterized in that it has a single sliding guide for the cutting apparatus, which is secured to the rotating head (218) so that the cutting or sliding direction is substantially perpendicular to the axis of rotation of the rotating head (218).

28. A disk type apparatus for cutting stone materials, wholly or partly as described, illustrated and for the purposes disclosed herein.
